# EUROPÄISCHE PATENTSCHRIFT

(11) **EP 0 702 708 B1**
(45) Veröffentlichungstag und Bekanntmachung des Hinweises auf die Patenterteilung: **11.03.1998**
(21) Anmeldenummer: 94919590.3
(22) Anmeldetag: 31.05.1994
(51) Int. Cl.: C09D 125/08, C09D 133/06

(54) **AKUSTISCH WIRKSAME PLASTISOLE**
ACOUSTICALLY ACTIVE PLASTISOLS
PLASTISOLS ACOUSTIQUEMENT ACTIFS

(30) Priorität: 07.06.1993 DE 4318712
(43) Veröffentlichungstag der Anmeldung: 27.03.1996
(73) Patentinhaber: Henkel Teroson GmbH, 69123 Heidelberg (DE)
(72) Erfinder: BUTSCHBACHER, Günter, D-74909 Meckenheim (DE); REIN, Manfred, 69469 Weinheim-Hohensachsen (DE); RUCH, Klaus, D-69168 Wiesloch (DE); WESCH, Karl, D-69429 Waldbrunn (DE)
(74) Vertreter: Mathes, Nikolaus
(86) Internationale Anmeldenummer: EP9401767
(87) Internationale Veröffentlichungsnummer: WO9429394

(56) Entgegenhaltungen:
- EP-A- 0 544 201

## Beschreibung

Die Erfindung betrifft die Verwendung von spritzbaren Plastisolzusammensetzungen zur Schalldämpfung.

Bei der Herstellung von Fahrzeugen, Maschinen und Geräten werden heutzutage fast ausschließlich sehr dünnwandige Bleche eingesetzt. Durch sich mechanisch bewegende Teile oder laufende Motoren werden diese dünnwandigen Bleche unvermeidbar in Schwingungen versetzt und strahlen demzufolge Schall ab. Eine weitere Ursache für störende Geräusche insbesondere bei fahrenden Kraftfahrzeugen sind aufprallende Teilchen (Steine und Splitt, Sand, Wasser), welche von den Rädern gegen die Radkästen und den Fahrzeugboden geschleudert werden. Dieses Geräusch wirkt besonders störend und unangenehm, da es in erheblichem Umfang höher frequente Schallanteile enthält.

Zur Reduzierung beider Schallarten hat es zahlreiche Lösungsvorschläge gegeben. Zur Reduzierung der Schallabstrahlung und Körperschalldämpfung werden diese Bleche daher insbesondere im Automobilbau und bei der Herstellung von Haushaltsgeräten mit schalldämpfenden Belägen, sogenannten Antidröhnbeschichtungen, versehen.

Nach herkömmlicher Verfahrensweise werden Mischungen aus Füllstoffen mit hohem spezifischen Gewicht und Bitumen zu Folien extrudiert, aus denen dann die entsprechenden Formteile gestanzt oder geschnitten werden. Anschließend werden diese Folien auf die betreffenden Blechteile geklebt, wobei sie gegebenenfalls noch unter Erwärmen an die Form des Bleches angepaßt werden müssen. Obwohl diese Bitumenfolien sehr spröde sind und insbesondere bei tiefen Temperaturen zum Abplatzen vom Blech neigen, finden sie wegen ihres geringen Materialpreises noch häufig Verwendung. Auch die vielfach vorgeschlagenen Zusätze von Elastomeren ergeben nur eine geringfügige Verbesserung, die für viele Anwendungen unzureichend ist. Des weiteren ist das Aufbringen der vorgeformten Bitumenteile auf kompliziert geformte oder schwer zugängliche Blechteile von Maschinen oder Fahrzeugen, z.B. die Innenflächen der Hohlräume von Kraftfahrzeugtüren, überhaupt nicht möglich. Als weiterer Nachteil kommt hinzu, daß für ein einziges Fahrzeug oder Gerät in vielen Fällen mehrere verschiedene Stanzteile benötigt werden, wodurch eine aufwendige Lagerhaltung erforderlich ist.

Es hat daher nicht an Versuchen gefehlt, mit anderen Polymersystemen die Nachteile der Bitumenfolien zu eliminieren. So wurden z.B. Füllstoffe enthaltende wäßrige Polymerdispersionen von Polyvinylacetat oder Ethylen-Vinylacetat-Copolymeren entwickelt, die auf die Blechteile in der notwendigen Belagdicke aufgespritzt werden können. Diese Systeme sind jedoch für die industrielle Verwendung mit hohen Fertigungsstückzahlen nachteilig, da insbesondere bei größeren Belagdicken das Wasser nicht schnell genug aus der aufgespritzten Schicht entfernt werden kann.

Die schalldämpfenden Eigenschaften von Polymerbeschichtungen sind im Bereich der Glasübergangstemperatur des Polymersystems am ausgeprägtesten, da in diesem Temperaturbereich aufgrund der Viskoelastizität des Polymeren die mechanische Energie der Schwingungsvorgänge über molekulare Fließvorgänge in Wärme umgewandelt wird. Herkömmliche spritzbare Beschichtungsmaterialien auf der Basis von PVC-Plastisolen, die z.B. als Unterbodenschutz im Automobilbau in großem Umfang Anwendung finden, weisen im Gebrauchstemperaturbereich von -20°C bis +60°C keine nennenswerte schalldämpfende Wirkung auf, da das Maximum des Glasübergangs je nach Weichmacheranteil bei etwa -20°C bis -50°C liegt.

Daher wurden Versuche unternommen, diese herkömmlichen PVC-Plastisole so zu modifizieren, daß sie im Gebrauchstemperaturbereich von -20°C bis +60°C bessere schalldämpfende Eigenschaften aufweisen. Aus der DE-A-3514753 sind Beschichtungen bekannt, die in üblichen PVC-Plastisolen mehrfach ungesättigte Verbindungen, z.B. Di- oder Triacrylate, peroxidische Vernetzer und anorganische Füllstoffe enthalten. Im ausgehärteten Zustand sind derartige Plastisole jedoch glashart und spröde, so daß diese für die Anwendung im Automobilbau wenig geeignet sind, da sie insbesondere bei tiefen Temperaturen keine ausreichende Flexibilität haben. Außerdem weisen diese Formulierungen einen sehr niedrigen Verlustfaktor (tan δ) auf, so daß die schalldämpfende Wirkung nicht sehr ausgeprägt ist.

In der DE-A-3444863 werden Zusammensetzungen beschrieben, die PVC bzw. Vinylchlorid/Vinylacetat-Copolymere, gegebenenfalls Methylmethacrylat-homopolymere oder -copolymere, eine Weichmachermischung und inerte Füllstoffe enthalten. Die Weichmachermischung besteht aus mit dem Methylmethacrylat-Polymeren verträglichen Weichmachern und Weichmachern für die Vinylchlorid-Polymeren, die mit dem gegebenenfalls vorhandenen Methacrylat-Polymeren unverträglich sind. Die so erhaltenen Plastisole weisen gegenüber herkömmlichen PVC-Plastisolen verbesserte schalldämpfende Eigenschaften auf. Insbesondere bei Temperaturen oberhalb von etwa 30°C sinkt die schalldämpfende Wirkung jedoch wieder. Versucht man, durch Variation der Mengenverhältnisse der Einzelkomponenten den Bereich des maximalen Verlustfaktors (tan δ) zu höheren Temperaturen zu verschieben, so nimmt die Kälteflexibilität der Beschichtung sehr stark ab. Eine reduzierte Kälteflexibilität ist aber gerade für eine Anwendung im Fahrzeugbau nachteilig. Außerdem nimmt bei diesen Formulierungen der Verlustfaktor bei niederen Temperaturen sehr stark ab. Derartige Plastisolzusammensetzungen haben also immer nur in einem sehr schmalen Temperaturbereich einen ausreichend hohen Verlustfaktor. Wie bereits oben erwähnt, ist bei den Zusammensetzungen gemäß DE-A-3444863 eine Weichmachermischung erforderlich, wobei der eine Weichmacher mit dem Methacrylat verträglich sein muß und mit dem PVC unverträglich und der andere Weichmacher mit dem PVC verträglich sein muß und mit dem Methacrylat-Polymeren unverträglich. Dies schränkt die Wahl der geeigneten Weichmacher extrem stark ein, wobei insbesondere die für das Methacrylat-Polymeren verträglichen Weichmacher sehr teuer sind, so daß es auch aus diesem Grunde wünschenswert ist, einfachere und wirtschaftlichere Alternativen zu finden.

Die DE-C-3830345 schlägt eine spritzbare Plastisolzusammensetzung vor bestehend aus einer Mischung von einer ersten Polymerkomponente, welche nach dem Gelieren des Plastisols die kontinuierliche Phase bildet und einer zweiten schwach vernetzten Polymerkomponente, welche nach dem Gelieren des Plastisols nur angequollen ist und in der kontinuierlichen Phase dispergiert vorliegt, wobei die kontinuierliche Phase im wesentlichen für die mechanischen Eigenschaften, wie Abriebfestigkeit, Kälteflexibilität, Härte und Haftung auf dem Untergrund verantwortlich ist, während die feinverteilte angequollene Polymerphase im wesentlichen für die schalldämpfenden Eigenschaften der ausgelierten Beschichtung verantwortlich ist.

Zur Reduzierung der Geräusche, die durch aufprallende Teilchen entstehen, schlägt die DE-C-4013318 zweischichtige Beschichtungen vor, die aus einer inneren, weichen Schicht bestehen und einer Deckschicht, die im wesentlichen den Abrieb der gesamten Beschichtung verhindert. Die DE-C-4013318 vermag zwar sowohl den Körperschall zu dämpfen als auch die durch aufprallende Teilchen hervorgerufenen Geräusche zu reduzieren, jedoch müssen zu diesem Zweck zwei Beschichtungen nacheinander auf die Substrate aufgebracht werden. Dieses bedeutet Lagerhaltung von zwei Materialien sowie doppelte Applikationsgeräte. Zur Vereinfachung der Anwendung im Kraftfahrzeugbau ist es wünschenswert, Beschichtungen bereitzustellen, die einschichtig applizierbar sind und vorzugsweise mit vorhandenem Applikationsgerät angewendet werden können.

Im Sinne einer geringeren Umweltbelastung ist es außerdem wünschenswert, Plastisolzusammensetzungen bereitzustellen, die chlorfrei formuliert werden können.

Die EP-A-0544201 beschreibt Plastisolzusammensetzungen auf der Basis von Acrylestercopolymeren und Weichmachern, wobei die Copolymeren als Hauptkomponenten 98 bis 50 Gew.% eines Alkylacrylates und/oder eines Alkylmethacrylates mit einer Alkylgruppe aus 1 bis 8 Kohlenstoffatomen und 2 bis 50 Gew.% eines Dien-Monomers enthalten. Es wird zwar angegeben, dass die Plastisole zur Schalldämpfung von Stahlplatten geeignet seien, konkrete Hinweise auf ihre Wirkung zur körperschalldämpfenden Wirkung und/oder Reduzierung der durch aufprallende Teilchen hervorgerufenen Geräusche und/oder Verhinderung von Luftschwingungen in Hohlräumen fehlen jedoch. Außerdem ist dieser Schrift nicht zu entnehmen, ob die dort offenbarten Plastisol-Zusammensetzungen auch bei Zusatz von Füllstoffen brauchbare schalldämpfende Eigenschaften und mechanische Eigenschaften haben.

Der Erfindung liegt daher die Aufgabe zugrunde, eine Beschichtung für steife Substrate, insbesondere für Bleche im Unterbodenbereich von Kraftfahrzeugen einschließlich der Radkästen zu entwickeln, welche körperschalldämpfend wirkt sowie korrosionsschützend und abriebfest ist, eine wesentliche Verringerung der durch aufprallende Teilchen hervorgerufenen Geräusche bewirkt und welche darüber hinaus als einschichtige Beschichtung mit vorhandenen Plastisolapplikationsgeräten anwendbar und vorzugsweise chlorfrei ist.

Es wurde jetzt überraschend gefunden, daß Beschichtungen aus Plastisolzusammensetzungen auf der Basis von Styrolcopolymeren, die 2 bis 20 Gew.% einer olefinisch ungesättigten Carbonsäure als Comonomer enthalten, sowohl korrosionsschützend und abriebfest sind als auch gleichzeitig körperschalldämpfend sind und eine wesentliche Verringerung der durch aufprallende Teilchen hervorgerufenen Geräusche bewirken. Plastisole auf Basis dieser Styrolcopolymeren und deren Verwendung als abriebfeste Beschichtung sind an sich aus der DE-A-4034725 bekannt. Neu und überraschend ist jedoch, daß derartige Beschichtungen zusätzlich zur Geräuschdämpfung geeignet sind. Diese zusätzliche Eigenschaft ermöglicht es, den Forderungen der Automobilindustrie gerecht zu werden, in einem Produkt die Funktion des Unterbodenschutzes (Schutz vor Abrieb) und der Reduzierung von Geräuschen gerecht zu werden.

Erfindungsgemäß werden spritzbare Plastisolzusammensetzungen vorgeschlagen, die mit herkömmlichen Plastisol-Auftragsgeräten versprüht werden können und auf konventionelle Weise geliert werden können. Diese Plastisozusammensetzungen sind dadurch gekennzeichnet, daß sie:
a) 5 bis 60 Gew.% mindestens eines pulverförmigen Styrolcopolymeren, das 2 bis 20 Gew.% einer olefinisch ungesättigten Carbonsäure als Comonomer enthält, und/oder AlkylmethacrylatHomopolymeren und/oder Copolymeren des Methylmethacrylates,
b) 5 bis 65 Gew.% Weichmacher,
c) 0 bis 40 Gew.% Füllstoffe,
d) 2 bis 40 Gew.% reaktive Zusätze, ausgewählt aus der Gruppe der ggf. hydroxyfunktionellen blockierten oder mikroverkapselten Di- oder Polyisocyanate ; Amino- und oder hydroxyfunktionelle Zusätze, insbesondere Di- oder Polyamine oder Polyaminoamide ; Epoxiharze,
e) ggf. weitere in der Plastisoltechnologie übliche Hilfs- und Zusatzstoffe
enthalten, wobei die Summe der Einzelkomponenten 100 Gew.% beträgt.

Besonders geeignete Styrolcopolymere sind in der DE-A-4034725 angegeben, die ausdrücklich Bestandteil dieser Erfindung sind.

Außerdem sind Copolymere des Methylmethacrylates mit 5 bis 48 Gew.% eines C2- bis C8-Alkylesters der Methacrylsäure und 0,5 bis 4 Gew.% eines haftvermittelnden und/oder vernetzend wirkenden Comonomeren für die erfindungsgemäßen Plastisole geeignet, ohne daß der Zusatz von PVC und einem zweiten Weichmacher notwendig ist. Als haftvermittelnde Comonomere für die Methacrylatcopolymeren sind N-Vinylimidazol oder Acrylsäure oder Methacrylsäure besonders geeignet.

Auch Alkylmethacrylathomopolymere, insbesondere die C₂-C₈-Alkylester der Methacrylsäure, die ggf. 0.5 bis 4 Gew.% eines haftvermittelnden und/oder vernetzend wirkenden Comonomeren enthalten, sind für die erfindungsgemässen Plastisole geeignet. Als haftvermittelnde Comonomere für die Alkylmethacrylathomopolymeren sind ebenfalls N-Vinylimidazol oder Acrylsäure, Methacrylsäure oder Itakonsäure besonders geeignet. Als besonders geeignetes Alkylmethacrylat hat sich das Ethylmethacrylat erwiesen.

Für die erfindungsgemäßen Plastisolzusammensetzungen können auch Kombinationen aus den oben genannten Styrolcopolymeren und den Copolymeren des Methylmethacrylates bzw. den Alkylmethacrylathomopolymeren entweder als Zweierkombination oder sogar eine Kombination aller drei Polymeren verwendet werden.

Als vernetzend wirkende Comonomere sowohl für die Methacrylatcopolymeren als auch für die Styrolcopolymeren sind diejenigen funktionellen Monomeren geeignet, die zusätzlich zur olefinisch ungesättigten Doppelbindung eine funktionelle Gruppe enthalten, die während der radikalen Polymerisation zur Herstellung des Copolymeren nicht reagiert, sondern erst während der Gelierung des Plastisols für Vernetzungsreaktionen zur Verfügung stehen. Diese zusätzliche funktionelle Gruppe kann z.B. eine Epoxy-, (blockierte) Isocyanat- oder Hydroxygruppe sein.

Als Weichmacher sind in der Regel alle herkömmlichen Weichmacher geeignet (vergleiche hierzu z.B. Paul E. Bruins, Plasticizer Technology [Weinhold Publ. Corp., New York], Bd. 1, S. 228-232). Bevorzugt werden Alkylphthalate wie Dibutylphthalat, Dioctylphthalat, Benzylbutylphthalat, Dibenzylphthalat, Diisononylphthalat (DINP), Diisodecylphthalat (DIDP) sowie Diundecylphthalat (DIUP). Geeignet sind jedoch auch die bekannten Weichmacher aus der Gruppe der organischen Phosphate, Adipate und Sebazate oder auch Benzylbenzoat, Alkylsulfonsäureester des Phenols bzw. Kresols, Dibenzyltoluol oder Diphenylether. Die Auswahlkriterien für die bevorzugt verwendeten Weichmacher richten sich zum einen nach der Polymerzusammensetzung sowie zum anderen nach Viskosität, Gelierbedingungen des Plastisols sowie den gewünschten akustischen Eigenschaften.

Als Füllstoffe für die erfindungsgemäßen Plastisole eignen sich alle an sich bekannten Füllstoffe, wie z.B. Calciumcarbonat in Form der diversen Kreiden, Schwerspat, Glimmer, Vermiculit, insbesondere bevorzugt wird Schwerspat.

Je nach dem im Copolymer eingesetzten vernetzend wirkenden Comonomeren können die erfindungsgemäßen Plastisole reaktive Zusätze enthalten. Bei hydroxyfunktionellen Comonomeren können Di- oder Polyisocyanate zugesetzt werden, wobei diese vorzugsweise blockiert oder mikroverkapselt sind, bei epoxyfunktionellen Comonomeren werden vorzugsweise Di- oder Polyamine oder Polyaminoamide zugesetzt, bei (blockierten) Isocyanat-funktionellen Comonomeren können Amino- und/oder hydroxyfunktionelle Zusätze verwendet werden. Die Polyaminoamide können vorzugsweise auch zugesetzt werden, wenn kein vernetzend wirkendes Comonomer in das Copolymer einpolymerisiert wurde, da diese mit den im Überschuß vorhandenen Carboxylgruppen des oder der Copolymeren vernetzend reagieren können. Gegebenenfalls können die Plastisolzusammensetzungen auch Mischungen von Copolymeren enthalten, außerdem können sowohl die Plastisole auf Basis der Styrolcopolymeren als auch die Plastisole auf Basis der Methacrylatcopolymeren Methylmethacrylathomopolymer als Zusatz enthalten.

Außerdem können die erfindungsgemäßen Plastisole gegebenenfalls weitere Hilfs- und Zusatzstoffe, wie sie in der Plastisol-Technologie üblich sind, enthalten. Hierzu zählen z.B. Farbpigmente, Alterungsschutzmittel, Rheologie-Hilfsmittel sowie Treibmittel zur Herstellung von geschäumten Plastisolen. Als Treibmittel geeignet sind alle an sich bekannten Treibmittel, vorzugsweise organische Treibmittel aus der Klasse der Azoverbindungen, N-Nitrosoverbindungen, Sulfonylhydrazide oder Sulfonylsemicarbazide. Aus der Klasse der Azoverbindungen seien das Azobisisobutyronitril und insbesondere das Azodicarbonamid genannt, aus der Klasse der Nitrosoverbindungen sei beispielhaft das Di-Nitrosopentamethylentetramin genannt, aus der Klasse der Sulfohydrazide das 4,4'-Oxybis(benzolsulfonsäurehydrazid) und aus der Klasse der Semicarbazide das p-Toluolsulfonylsemicarbazid genannt.

Die geschäumten Plastisole sind insbesondere geeignet zur Reduktion der Geräusche, die bei fahrenden Kraftfahrzeugen durch aufprallende Teilchen (Steine und Splitt, Sand, Wasser) hervorgerufen werden. Da hiervon hauptsächlich die Radkästen und Teile des Fahrzeugbodens betroffen sind, werden die geschäumten Plastisole auch bevorzugt in diesen Bereichen eingesetzt.

Ein weiteres Einsatzgebiet für die geschäumten Plastisole ist die Verwendung als sogenannte "pillar-fillers" in Hohlräumen wie den Dachholmen oder den A-, B- und/oder C-Säulen eines Kraftfahrzeuges. Hierbei wird in der Art eines Pfropfens durch das geschäumte Plastisol der gesamte Querschnitt des Hohlraums versperrt, um zu verhindern, daß die in den Holmen eingeschlossenen Luftsäulen zu schwingen beginnen können.

Auch wenn mit der Plastisol-Beschichtung überwiegend körperschalldämpfende Eigenschaften erzielt werden sollen, kann dieser Effekt häufig durch Aufschäumung verstärkt werden.

Die erfindungsgemäßen Plastisole zeichnen sich überraschenderweise durch einen hohen Verlustfaktor aus, wie er für eine wirksame Körperschalldämpfung notwendig ist. Dieser Verlustfaktor wurde nach üblichen Methoden entweder mit Hilfe der dynamisch mechanischen Thermoanalyse (DMTA) ermittelt oder durch den Biegeschwingungsversuch nach Oberst.

Zur Bestimmung der Reduktion des durch Steinschlag, Spritzwasser und ähnliche Teilchen hervorgerufenen Schalles wurden mit den erfindungsgemäßen Plastisolen beschichtete Bleche nach der APAMAT (R)-Methode vermessen. Bei dieser Methode werden Kugeln gegen die beschichtete Seite des Bleches geschleudert und das Schalldruck-Spektrum des beschichteten Bleches mit dem Schalldruck-Spektrum eines unbehandelten Bleches verglichen. Die Differenz dieser beiden Schalldrucke wird in Abhängigkeit von der Frequenz aufgetragen.

Zur näheren Erläuterung der Erfindung sollen die nachfolgenden Beispiele dienen, sie haben nur exemplarischen Charakter und decken nicht die gesamte Breite der erfindungsgemäßen Plastisole ab. Aus den oben gemachten Angaben kann der Fachmann diese jedoch leicht herleiten.

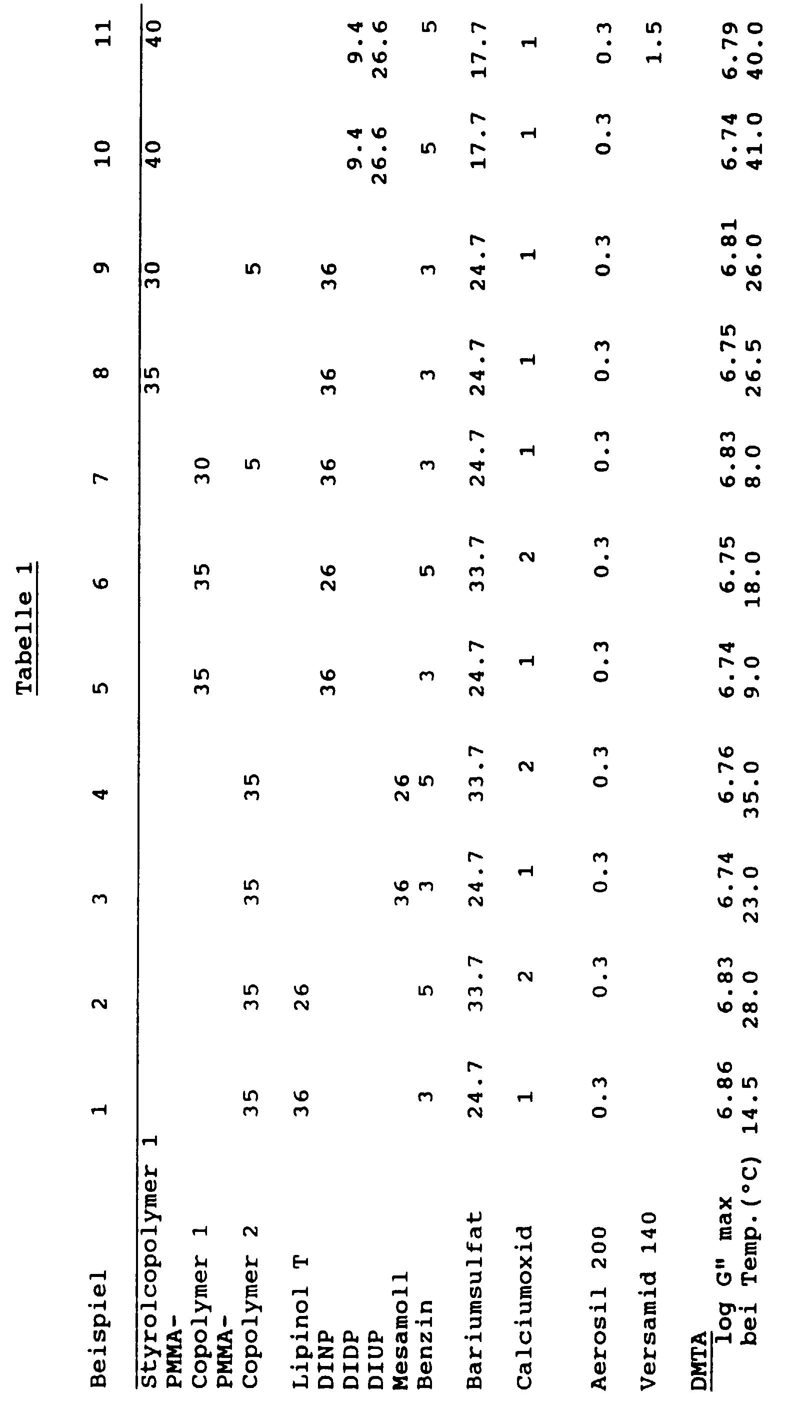

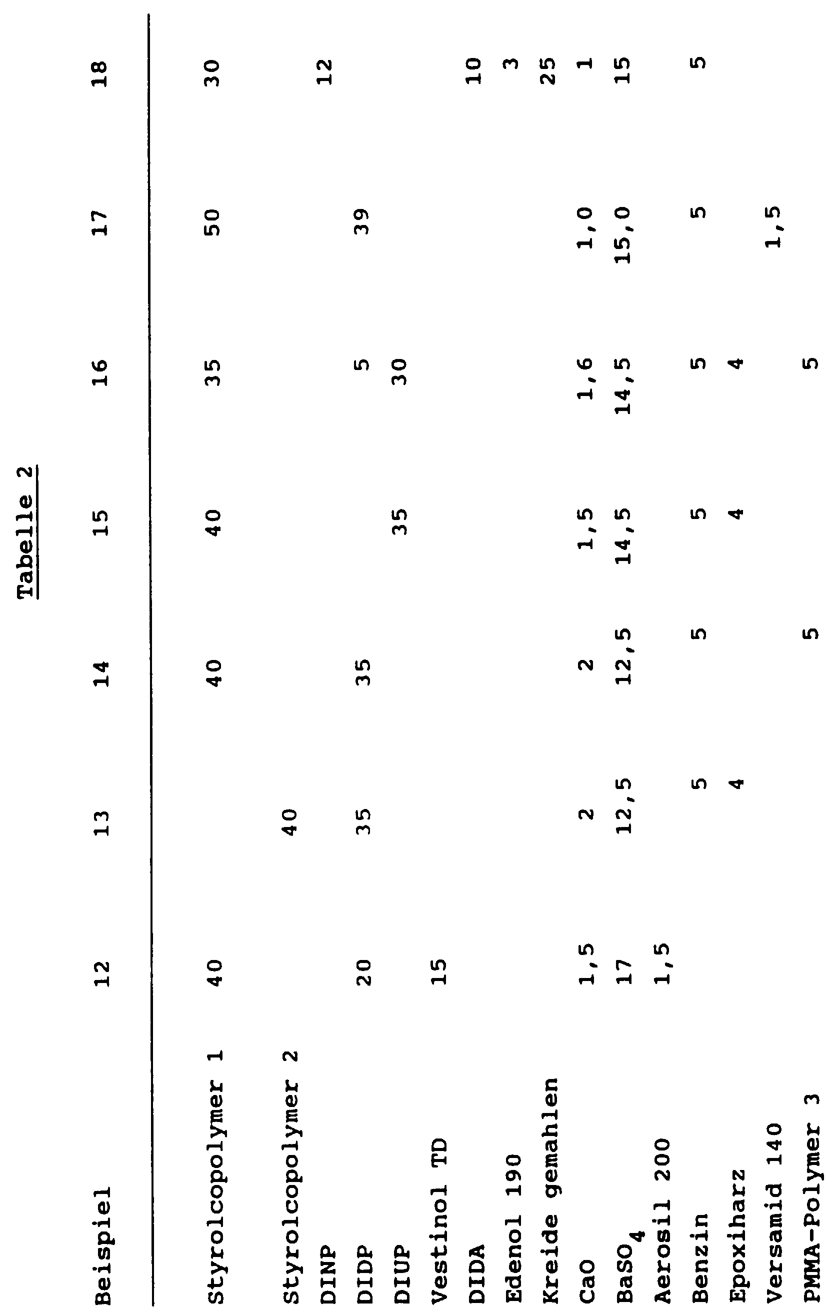

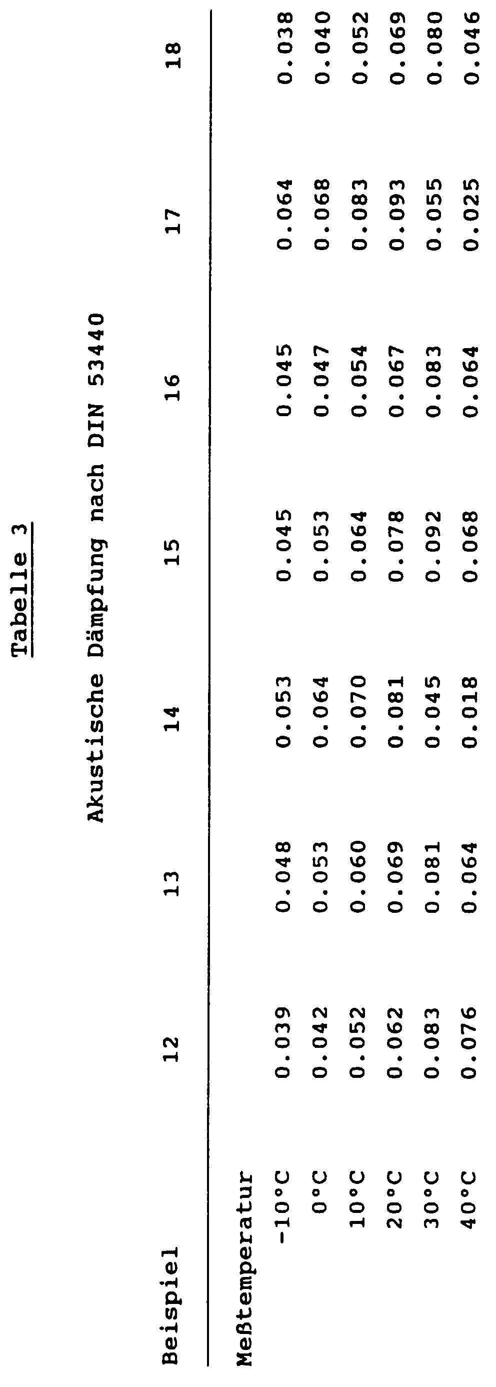

### Beispiel 19

Auf der Basis von Methacrylatpolymeren wurde ein Plastisol der folgenden Zusammensetzung hergestellt:

| | |
|---|---|
| PMMA-Copolymer 2 | 15.0 Teile |
| PMMA-Polymer 3 | 15.0 Teile |
| Lipinol T | 26.97 Teile |
| Kreide, gemahlen | 5.0 Teile |
| Calciumoxidpulver | 3.50 Teile |
| Bariumsulfat | 22.0 Teile |
| Haftvermittler (Phenolharz) | 2.0 Teile |
| Aliphatische Kohlenwasserstoffe | 3.5 Teile |
| Rußpigment | 0.03 Teile, |

### Beispiel 20

Zur Herstellung eines schäumbaren Plastisols wurde ein Plastisol des Beispiels 19 verwendet, zu dem zusätzlich 7 Teile einer Treibmittelpaste bestehend aus 40 Teilen Lipinol T, 15 Teilen Calciumcarbonat, 15 Teilen Harnstoff, 7.5 Teilen Zinkstearat und 22.5 Teilen Azodicarbonamid zugemischt wurden.

Mit dem Plastisol des Beispiels 19 wurden Dämpfungsmessungen nach der Oberst-Methode durchgeführt, zusätzlich wurden mit den Plastisolen des Beispiels 19 und 20 beschichtete Bleche nach der APAMAT-Methode vermessen.

### Vergleichsversuch:

Für Vergleichsversuche wurde ein PVC-Plastisol nach herkömmlichem Stand der Technik mit folgender Zusammensetzung hergestellt:

| | |
|---|---|
| Emulsions-PVC vom Pastentyp | 32.0 Teile |
| Dioctylphthalat | 30.0 Teile |
| Gemahlene natürliche Kreide | 16.5 Teile |
| Gefällte Kreide | 6.0 Teile |
| Calciumoxid | 3.0 Teile |
| Farbpigment (Mischung von Metalloxiden) | 1.0 Teile |
| Pigmentruß | 0.1 Teile |
| PVC-Stabilisatoren | 1.0 Teile |
| Haftvermittler | 2.0 Teile |
| Pyrogene Kieselsäure | 0.4 Teile |
| Kohlenwasserstoffgemisch | 8.0 Teile. |

Mit dem oben genannten PVC-Plastisol wurden akustische Dämpfungswerte nach der Oberst-Methode bestimmt, außerdem wurden beschichtete Bleche nach der APAMAT-Methode vermessen.

### Anmerkungen zu den Beispielen 1 bis 20:

Das Styrolcopolymer 1 der Beispiele 8 bis 12 und 14 bis 18 ist ein Styrolcopolymer mit 6.4 % Methacrylsäure wie es in der DE-A-4034725 beschrieben ist, das Styrolcopolymer 2 enthält 7.5 % Methacrylsäure.

Das PMMA-Copolymer 1 ist ein Carboxylgruppen-haltiges Methylmethacrylatcopolymer bestehend aus etwa 63 % Methylmethacrylat, etwa 35 % Butylmethacrylat sowie etwa 2 % Methacrylsäure.

Das PMMA-Copolymer 2 enthält etwa 83 % Methylmethacrylat, etwa 15 % Butylmethacrylat sowie etwa 2 % N-Vinylimidazol.

Das PMMA-Polymer 3 enthält etwa 98 % Methylmethacrylat und etwa 2 % Vinylimidazol ("Methylmethacrylathomopolymer").
Lipinol T (Handelsmarke Fa. Hüls): Dibenzyltoluol
DINP: Diisononylphthalat
DIDP: Diisodecylphthalat
DIUP: Disioundecylphthalat
Mesamoll (Handelsmarke der Fa. Bayer): Phenolester eines Gemisches aliphatischer Sulfonsäuren
Edenol 190 (Handelsmarke der Fa. Henkel): Talgfettsäure Isooctylester
Aerosil 200 (Handelsmarke der Fa. Degussa): Pyrogene Kieselsäure
Versamid 140 (Handelsname der Fa. Witco): Polyaminoamid auf Basis Dimerfettsäuren
Vestinol TD (Handelsname der Fa. Hüls): Tridecylphthalat
DIDA: Diisodecyladipat
APAMAT-Meßeinrichtungen sind eine Entwicklung der Fa. Keller GMBH

Alle in der Tabelle aufgeführten Plastisole wurden 25 Min. lang bei 160°C geliert, die Mengenangaben sind Gewichtsteile. Die Compoundierungen erfolgten mittels Dissolver, die Plastisole sind aufgrund ihrer Viskosität (ca. 1 bis 3 Pa.s, gemessen bei 23°C mit Rheomat 30, System 14 der Fa. Contraves) spritzbare Massen und zeichnen sich durch gute Lagerstabilität aus.

Die in Tabelle 1 angegebenen Dämpfungswerte wurden mit der dynamisch mechanischen Thermoanalyse (DMTA), Hersteller: Polymer Laboratories, bei 10 Hz ermittelt.

Wie aus den DMTA-Messungen deutlich hervorgeht, lassen sich die Verlustfaktoren (logG") durch die geeignete Wahl der Polymerzusammensetzung bzw. der Weichmacher in den Plastisolmischungen innerhalb weiter Grenzen verschieben. Alle Zusammensetzungen wiesen zusätzlich gute Gebrauchseigenschaften als Unterbodenschutz sowie eine gute Reduktion des durch einschlagende Teilchen hervorgerufenen Schalls auf.

Der Verlustmodul G" wird in Pa gemessen und hat sein Maximum im Bereich der Glasübergangstemperatur des entsprechenden Beschichtungsmaterials.

Die akustischen Dämpfungswerte (dcombi) der Tabelle 3 wurden nach DIN 53440 - der Oberst-Methode - bestimmt (bei 200 Hz), es wurde auf ein Belaggewicht von 50% normiert, d.h. das Gewicht der Beschichtung mit dem akustisch dämpfenden Plastisol betrug 50% des Blechgewichtes. Die Abmessungen der Federstahlbleche waren 240 x 10 mm, 1 mm Dicke. Der Blechstreifen war auf einer Länge von 200 mm mit dem erfindungsgemäßen Plastisol beschichtet.

Dabei wurden die Plastisole mit Hilfe eines dünn aufgetragenen Haftprimers auf dem Meßstreifen (Federstahl) aufgebracht und 25 Min. bei 160°C geliert.

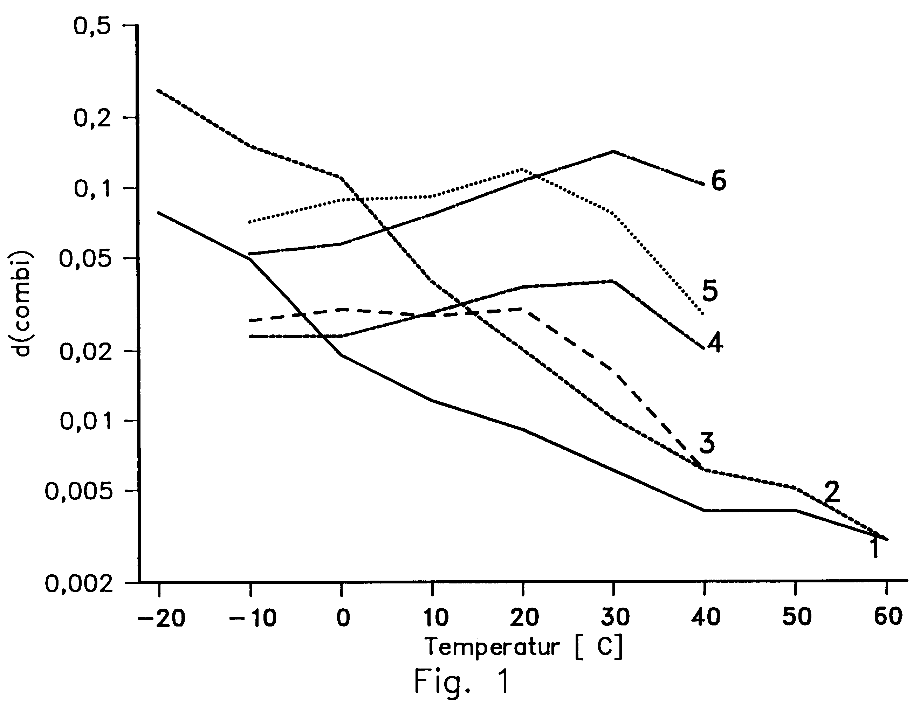

### Erläuterung zu den Figuren 1 bis 3:

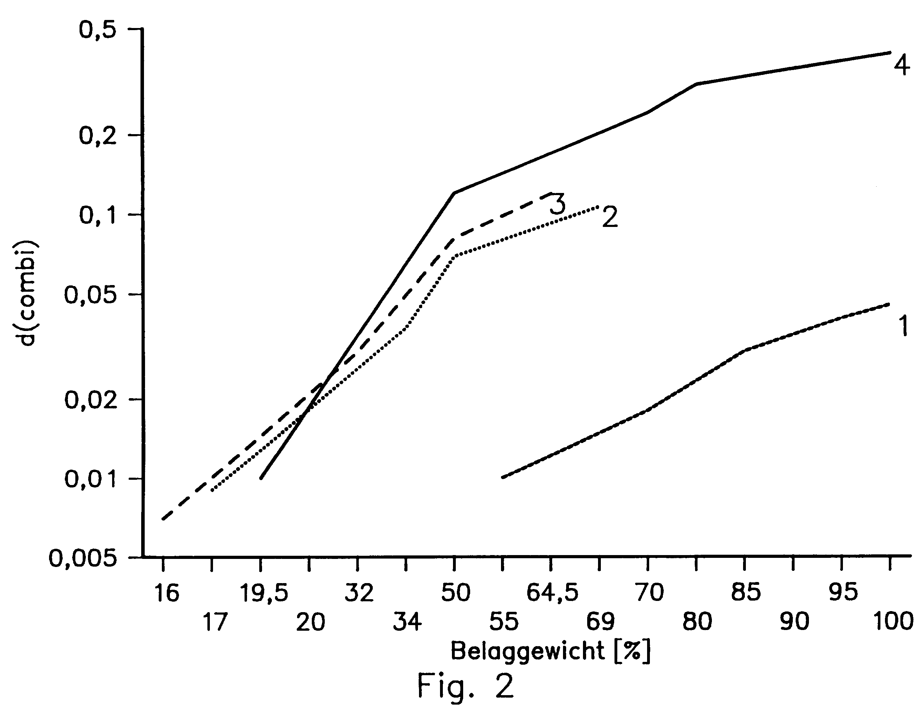

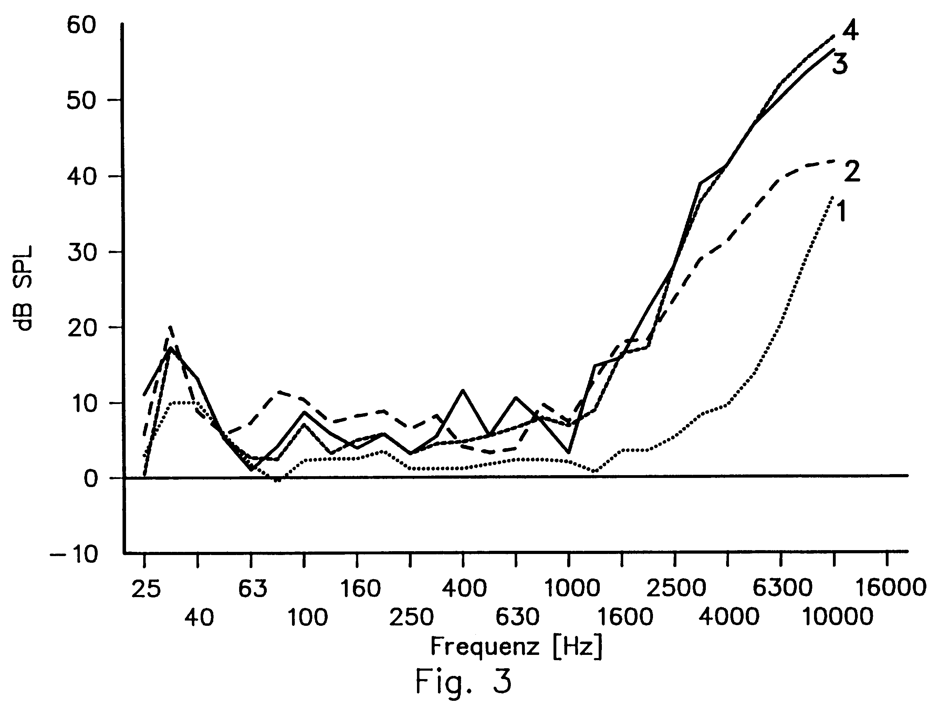

Die Figuren 1 und 2 zeigen den kombinierten Verlustfaktor bei 200 Hz von beschichteten Stahlstreifen gemäß DIN 53440 Teil 3. Die Figur 3 zeigt die graphische Darstellung der Meßergebnisse der Bleche, die nach der APAMAT-Methode in Abhängigkeit von der Frequenz gemessen wurde.

**Figur 1** zeigt die Temperaturabhängigkeit des Verlustfaktors eines konventionellen PVC-Plastisols des Vergleichsversuches (**1,2**) im Vergleich zu den erfindungsgemäßen Beispielen 14 (**3,5**) und 18 (**4,6**) bei jeweils 2 verschiedenen Schichtstärken des Plastisols auf dem Stahlstreifen.

| Kurve | Formulierung | Dicke der Beschichtung |
|---|---|---|
| 1 | Vergleichsbeispiel | 2.27 mm |
| 2 | Vergleichsbeispiel | 4.52 mm |
| 3 | Beispiel 14 | 2.0 mm |
| 4 | Beispiel 18 | 2.0 mm |
| 5 | Beispiel 14 | 4.0 mm |
| 6 | Beispiel 18 | 4.0 mm. |

Aus Figur 1 ist deutlich zu ersehen, daß insbesondere in dem für Gebrauchseigenschaften wichtigen Temperaturbereich von 0 bis 35°C die erfindungsgemäßen Plastisole gegenüber dem herkömmlichen PVC-Plastisol bei allen Beschichtungsstärken einen deutlich höheren Verlustfaktor aufweisen und damit besser zur Dämpfung von Körperschall geeignet sind.

Die **Figur 2** zeigt die Abhängigkeit des Verlustfaktors vom Belaggewicht der Beschichtung. Die Kurve **1** zeigt dabei das herkömmliche PVC-Plastisol des Vergleichsbeispiels, die Kurven **2** und **3** zeigen die erfindungsgemäßen Beispiele 14 und 18 und die Kurve **4** zeigt das erfindungsgemäße Beispiel 19.
Aus dieser Darstellung ist zu entnehmen, daß selbst bei hohen Belagsgewichten mit PVC-Plastisolen nur sehr niedrige Dämpfungswerte zu erreichen sind, wogegen mit den erfindungsgemäßen Plastisolen bereits ab einem Belaggewicht von 50 % völlig ausreichende Verlustfaktoren von etwa 0.1 (Kurven **2,3,4**) zu erzielen sind.

**Figur 3** zeigt die Meßergebnisse der Zusammensetzungen gemäß Beispiel 19 (Kurve **3**) und Beispiel 20 (Kurve **4**) gegen ein herkömmliches PVC-Plastisol des Vergleichsbeispiels (Kurve **1**) sowie einer PP/EPDM Platte (Kurve **2**), die auf das Meßblech aufgebracht wurde. Auch aus dieser Darstellung wird deutlich, daß insbesondere bei den höheren Frequenzen ab etwa 1000 Hz, bei denen das menschliche Ohr besonders empfindlich ist, die Geräusche signifikant stärker gedämpft werden (Kurven **3,4**), wenn die Bleche mit den erfindungsgemäßen Plastisolen beschichtet werden, als wenn der Stand der Technik (Kurve **1,2**) angewendet wird.

## Patentansprüche

1. Verwendung von spritzbaren Plastisol-Zusammensetzungen auf der Basis von pulverförmigen organischen Polymeren und Weichmachern, gekennzeichnet durch einen Gehalt an
a) 5 bis 60 Gew.% mindestens eines pulverförmigen Styrolcopolymeren, das 2 bis 20 Gew.% einer olefinisch ungesättigten Carbonsäure als Comonomer enthält, und/oder Alkylmethacrylathomopolymeren und/oder Copolymeren des Methylmethacrylates,
b) 5 bis 65 Gew.% Weichmacher,
c) 0 bis 40 Gew.% Füllstoffen,
d) 2 bis 40 Gew.% reaktive Zusätze, ausgewählt aus der Gruppe der ggf. hydroxyfunktionellen blockierten oder mikroverkapselten Di- oder Polyisocyanate; Amino- und/ oder hydroxyfunktionelle Zusätze, insbesondere Di- oder Polyamine oder Polyaminoamide; Epoxiharze,
e) ggf. weiteren Hilfs- und Zusatzstoffen, wobei die Summe der Einzelkomponenten 100 Gew.% beträgt,
zur körperschalldämpfenden und/oder die durch aufprallende Teilchen hervorgerufenen Geräusche reduzierenden und/oder Luftschwingungen in Hohlräumen verhindernden Beschichtungen von steifen Substraten, insbesondere Blechen an oder in Kraftfahrzeugen.

2. Verwendung von Plastisolzusammensetzungen nach Anspruch 1, dadurch gekennzeichnet, daß das Styrolcopolymer 2 bis 20 Gew.% einer olefinisch ungesättigten Carbonsäure sowie 0.2 bis 5 Gew.% eines weiteren vernetzend wirkenden Comonomeren, bezogen auf die Monomerzusammensetzung, enthält.

3. Verwendung von Plastisolzusammensetzungen nach Anspruch 1, dadurch gekennzeichnet, daß das Methylmethacrylatcopolymer 5 bis 48 Gew.% eines C₂- bis C₈-Alkylester der Methacrylsäure und 0.5 bis 4 Gew.% eines haftvermittelnden und/oder vernetzend wirkenden Comonomeren bezogen auf die Monomerzusammensetzung enthält.

4. Verwendung von Plastisolzusammensetzungen nach Anspruch 1, dadurch gekennzeichnet, daß das Alkylmethacrylathomopolymer ein C₁-C₈-Alkylester der Methacrylsäure ist und gegebenenfalls 0.5 bis 4 Gew.% eines haftvermittelnden und/oder vernetzend wirkenden Comonomeren bezogen auf die Monomerzusammensetzung, enthält.

5. Verwendung von geschäumten Plastisolzusammensetzungen gemäß mindestens einem der Ansprüche 1 bis 4, dadurch gekennzeichnet, daß die Zusammensetzung ein Treibmittel enthält.

6. Verwendung von Zusammensetzungen gemäß Anspruch 5, dadurch gekennzeichnet, daß das Treibmittel aus der Gruppe der Azoverbindungen, N-Nitrosoverbindungen, Sulfonylhydrazide oder Sulfonylsemicarbazide ausgewählt wird.

7. Verwendung von Zusammensetzungen gemäß mindestens einem der Ansprüche 1 bis 6, dadurch gekennzeichnet, daß die Beschichtungen gleichzeitig die Substrate vor Abrieb und/oder Korrosion schützen.

## Revendications

1. Utilisation de compositions de plastisols pulvérisables à base de polymères organiques sous forme pulvérulente et de plastifiants,
caractérisée par une teneur de
a) 5 à 60 % en poids au moins d'un copolymère de styrène en poudre, qui contient 2 à 20 % en poids d'un acide carboxylique insaturé oléfiniquement comme comonomère et/ou d'un homopolymère d'un méthacrylate d'alkyle et/ou d'un copolymère du méthacrylate de méthyle,
b) 5 à 65 % en poids de plastifiant,
c) 0 à 40 % en poids de matières de charge,
d) 2 à 40 % en poids d'additifs réactifs, choisis dans le croupe des di- ou polyisocyanates éventuellement hydroxyfonctionnels bloqués ou microblindés ; des additifs amino- ou hydroxy fonctionnels, en particulier des di- ou polyamides ou des polyaminoamides ; des résines époxy,
e) éventuellement d'autres adjuvants ou additifs usuels,
la somme des composants individuels se montant à 100 % en poids, pour des enductions amortissant les bruits de structure et/ou réduisant les bruits causés par le choc de petites pièces et/ou empêchant les vibrations de l'air dans les espaces creux, revêtements de substrats rigides, en particulier de tôles sur ou dans des véhicules à moteur.

2. Utilisation de compositions de plastisols selon la revendication 1,
caractérisée en ce que
le copolymère de styrène 2 contient 2 à 20 % en poids d'un acide carboxylique insaturé oléfiniquement ainsi que 0,2 à 5 % en poids d'un autre comonomère agissant sur la réticulation, par rapport à la composition du monomère.

3. Utilisation de compostions de plastisol selon la revendication 1,
caractérisée en ce que
le copolymère de méthacrylate de méthyle contient par rapport à la composition monomère 5 à 48 % en poids d'un ester d'alkyle en C₂ à C₈ de l'acide méthacrylique et 0,5 à 4 % en poids d'un comonomère établissant l'adhérence et/ou agissant sur la réticulation.

4. Utilisation de compositions de plastisol selon la revendication 1,
caractérisée en ce que
l'homopolymère de méthacrylate d'alkyle est un ester d'alkyle en C₁-C₈ de l'acide méthacrylique et il contient éventuellement par rapport à la composition monomère 0,5 à 4 % en poids d'un comonomère établissant l'adhérence et/ou agissant sur la réticulation.

5. Utilisation de compositions de plastisol mousseuses selon au moins une des revendications 1 à 4,
caractérisée en ce que
la composition contient un agent moussant.

6. Utilisation de compositions selon la revendication 5,
caractérisée en ce que
l'agent moussant est choisi dans le groupe des composés azoïques, des composés N-nitreux, des sulfonylhydrazides ou des sulfonylsemicarbozides.

7. Utilisation de compositions selon au moins une des revendications 1 à 6,
caractérisée en ce que
les revêtements protègent en même temps les substrats de l'usure et/ou de la corrosion.

## Claims

1. The use of sprayable plastisol compositions based on powder-form organic polymers and plasticizers, characterized by a content of
a) 5 to 60% by weight of at least one powder-form styrene copolymer containing 2 to 20% by weight of an olefinically unsaturated carboxylic acid as comonomer and/or alkyl methacrylate homopolymer and/or copolymer of methyl methacrylate,
b) 5 to 65% by weight of plasticizers,
c) 0 to 40% by weight of fillers,
d) 2 to 40% by weight of reactive additives selected from the group of optionally hydroxyfunctional, blocked or microencapsulated di- or polyisocyanates; amino- and/or hydroxyfunctional additives, more particularly di- or polyamines or polyaminoamides; epoxy resins,
e) optionally other auxiliaries and additives,
the sum of the individual components being 100% by weight,
for coatings of stiff substrates, more particularly metal plates on or in motor vehicles, which dampen vibration and/or reduce the noise caused by particle impact and/or prevent air vibration in cavities.

2. The use of plastisol compositions as claimed in claim 1, characterized in that the styrene copolymer contains 2 to 20% by weight of an olefinically unsaturated carboxylic acid and 0.2 to 5% by weight of another crosslinking comonomer, based on the monomer composition.

3. The use of plastisol compositions as claimed in claim 1, characterized in that the methyl methacrylate copolymer contains 5 to 48% by weight of a C₂₋₈ alkyl ester of methacrylic acid and 0.5 to 4% by weight of a coupling and/or crosslinking comonomer, based on the monomer composition.

4. The use of plastisol compositions as claimed in claim 1, characterized in that the alkyl methacrylate homopolymer is a C₁₋₈ alkyl ester of methacrylic acid and optionally contains 0.5 to 4% by weight of a coupling and/or crosslinking comonomer, based on the monomer composition.

5. The use of foamed plastisol compositions according to at least one of claims 1 to 4, characterized in that the composition contains a blowing agent.

6. The use of compositions as claimed in claim 5, characterized in that the blowing agent is selected from the group consisting of azo compounds, N-nitroso compounds, sulfonyl hydrazides or sulfonyl semicarbazides.

7. The use of compositions as claimed in any of claims 1 to 6, characterized in that the coatings also protect the substrates against abrasion and/or corrosion.
